# EUROPEAN PATENT APPLICATION

(11) **EP 3 054 373 A1**
(43) Date of publication of application: **10.08.2016**
(21) Application number: 13896370.7
(22) Date of filing: 31.10.2013
(51) Int. Cl.: G06F 3/041

(54) **METHOD AND APPARATUS FOR PROCESSING SUSPENDED OR DISTANCE OPERATION**

(71) Applicant: Huawei Technologies Co., Ltd., Longgang District Shenzhen, Guangdong 518129 (CN)
(72) Inventor: GAN, Yuanli, Shenzhen Guangdong 518129 (CN); KONG, Jianyong, Shenzhen Guangdong 518129 (CN)
(74) Representative: Pfenning, Meinig & Partner mbB
(86) International application number: PCT/CN2013/086309
(87) International publication number: WO 2015/062017

(57) **Abstract**

The present invention relates to a floating or mid-air operation processing method and apparatus, where the method includes: when a terminal detects that an operation of an operating object in a floating or mid-air sensing area of the terminal satisfies a predefined condition, triggering, by the terminal, activation of a zooming/rotation mode; detecting, by the terminal, a movement track of the operating object; and generating, by the terminal according to the movement track of the operating object, an instruction for performing a zooming or rotation operation on content displayed on a screen of the terminal. In the floating or mid-air operation processing method and apparatus provided in the present invention, displayed objects such as a web page and a picture can be viewed in a zooming manner during a floating or mid-air operation, which replaces an existing multi-touch function and is flexible and convenient to operate.

## Description

### TECHNICAL FIELD

The present invention relates to the field of terminal device technologies, and in particular, to a floating or mid-air operation processing method and apparatus.

### BACKGROUND

With the development of intelligent mobile terminals, touchscreens greatly improve experience of interaction between users and terminals, and have been widely used. However, in some particular scenarios, a finger cannot touch a screen, or it is inconvenient to touch a screen, or only one hand can touch the screen. For example, on a bus, a user needs to catch a handrail and also needs to view web page or picture information, and it is very difficult to operate by using both hands. For example, during cooking, it is inconvenient for hands to touch the screen, and when the user needs to view a web page or a picture, both hands cannot touch the screen.

Floating touch is a technology in which a finger of a user may be used to perform a touch operation on a screen of a terminal in a case in which the finger does not touch the screen. There are two capacitive sensors on a touchscreen supporting the floating touch: a mutual capacitance sensor and a self capacitance sensor. The self capacitance sensor can generate a stronger signal than the mutual capacitance sensor does, so as to detect sensing for a farther finger, and have a detection distance range up to 20 mm. An electric field of the mutual capacitance sensor is very small, and as a result, signal strength is very weak, and the mutual capacitance sensor cannot detect those very weak signals. Therefore, when a finger of a user hovers above a screen, the mutual capacitance sensor cannot detect a signal. A signal that can be detected by the self capacitance sensor is stronger than that of the mutual capacitance sensor, so that a device can detect a finger that is at 20 mm above a screen.

For a mid-air operation, an approaching gesture is identified and determined by using a sensor, such as a touchscreen, a camera, an ultrasonic sensor, or an infrared sensor, and a longitudinal area (a distance to the touchscreen) in which the mid-air operation can be sensed is farther than that of the floating operation. When both hands cannot touch a screen, the mid-air operation is more suitable.

### SUMMARY

An objective of the present invention is to provide a floating or mid-air operation processing method and apparatus, so that displayed objects such as a web page and a picture can be viewed in a zooming manner during a floating or mid-air operation, which replaces existing multi-touch function and is flexible and convenient to operate.

To implement the objective above, a first aspect of the present invention provides a floating or mid-air operation processing method, where the method includes:
detecting, by a terminal, whether a floating or mid-air operation of an operating object in a floating or mid-air sensing area of the terminal satisfies a predefined condition; and if yes, detecting, by the terminal, a movement track of the operating object; and
performing, by the terminal according to the movement track of the operating object, a zooming or rotation operation on content displayed on a screen of the terminal.

With reference to the first aspect, in a first implementation manner of the first aspect, the detecting, by a terminal, whether a floating or mid-air operation of an operating object in a floating or mid-air sensing area of the terminal satisfies a predefined condition includes: detecting, by the terminal, whether the floating or mid-air operation of the operating object is a hover operation of the operating object whose position remains unchanged or whose position shift is in a tolerance range within a first time threshold, where if yes, the floating or mid-air operation in the floating or mid-air sensing area of the terminal satisfies the predefined condition.

With reference to the first implementation manner of the first aspect, in a second implementation manner of the first aspect, the detecting, by the terminal, whether the floating or mid-air operation of the operating object is a hover operation specifically includes:
when the terminal detects the operating object in the floating or mid-air sensing area of the terminal, setting a current position of the operating object as an initial hover position, and starting a timer; and
if detecting that a shift of the operating object relative to the initial hover position is beyond the tolerance range, and a count of the timer does not reach the first time threshold, setting a current position of the operating object as the initial hover position, and restarting the timer; or
if the count of the timer reaches the first time threshold, determining that the floating or mid-air operation is a hover operation, setting a current position of the operating object as the initial hover position, and restarting the timer.

With reference to the first implementation manner or the second implementation manner of the first aspect, in a third implementation manner of the first aspect, the performing, by the terminal, a zooming or rotation operation on content displayed on a screen of the terminal includes:
determining an area in the content displayed on the screen of the terminal and corresponding to a second position as a central area of the zooming or rotation operation, determining the second position as a starting position of the zooming or rotation operation, and performing the zooming or rotation operation on the content displayed on the screen of the terminal, where the second position is a floating position of the operating object when the terminal detects that the floating or mid-air operation of the operating object is a hover operation; and
the detecting, by the terminal, a movement track of the operating object includes:
   calculating and recording a shift between a current floating position and the starting position of the operating object, and using the shift as the movement track of the operating object.

With reference to the third implementation manner of the first aspect, in a fourth implementation manner of the first aspect, after the performing, by the terminal, a zooming or rotation operation on content displayed on a screen of the terminal, the method further includes:
when the terminal detects for a second time that a floating or mid-air operation of the operating object is a hover operation, updating, by the terminal, a floating position of the operating object obtained when the hover operation of the operating object is detected for a second time, as a starting position of the zooming or rotation operation, and determining content displayed on the screen of the terminal and corresponding to the floating position of the operating object obtained when the hover operation of the operating object is detected for a second time, as a central area of the zooming or rotation operation.

With reference to the first aspect or any one of the first to fourth implementation manners of the first aspect, in a fifth implementation manner of the first aspect, the movement track of the operating object includes one or any combination of the following:
a movement track of the operating object in an x-axis direction of a plane rectangular coordinate system in a plane that is parallel to the screen of the terminal; or
a movement track of the operating object in a y-axis direction of the plane rectangular coordinate system; or
a movement track of the operating object in a z direction that is perpendicular to the screen of the terminal.

With reference to the fifth implementation manner of the first aspect, in a sixth implementation manner of the first aspect, the performing, by the terminal according to the movement track of the operating object, a zooming or rotation operation on content displayed on a screen of the terminal specifically includes one or any combination of the following:
when the movement track of the operating object in the z direction is getting close to the screen of the terminal, performing, by the terminal, a zoom-in operation on the content displayed on the screen of the terminal;
when the movement track of the operating object in the z direction is getting far from the screen of the terminal, performing, by the terminal, a zoom-out operation on the content displayed on the screen of the terminal;
when the movement track of the operating object in the x-axis direction is beyond a preset range, performing, by the terminal, a rotation operation on the content displayed on the screen of the terminal; and
when the movement track of the operating object in the y-axis direction is beyond a preset range, performing, by the terminal, a rotation operation on the content displayed on the screen of the terminal.

According to a second aspect, the present invention further provides a floating or mid-air operation processing apparatus, where the apparatus includes: a sensor and a processor, where
the sensor is configured to detect a floating or mid-air operation of an operating object in a floating or mid-air sensing area of the sensor;
the processor is configured to determine whether the floating or mid-air operation of the operating object detected by the sensor satisfies a predefined condition; and the processor is configured to: when the processor determines that the floating or mid-air operation of the operating object satisfies the predefined condition, detect a movement track of the operating object by using the sensor; and
the processor is further configured to perform, according to the movement track of the operating object, a zooming or rotation operation on content displayed on a screen.

With reference to the second aspect, in a first implementation manner of the second aspect, the determining, by the processor, whether the floating or mid-air operation of the operating object detected by the sensor satisfies a predefined condition is specifically: determining, by the processor, whether the floating or mid-air operation of the operating object detected by the sensor is a hover operation of the operating object whose position remains unchanged or whose position shift is in a tolerance range within a first time threshold, where if yes, the floating or mid-air operation in the floating or mid-air sensing area of the terminal satisfies the predefined condition.

With reference to the first implementation manner of the second aspect, in a second implementation manner of the second aspect, the determining, by the processor, whether the floating or mid-air operation of the operating object is a hover operation specifically includes: when the sensor detects the operating object, setting, by the processor, a current position of the operating object as an initial hover position, and starting a timer; and
if the processor determines that a shift, detected by the sensor, of the operating object relative to the initial hover position is beyond the tolerance range, and a count of the timer does not reach the first time threshold, setting, by the processor, a current position of the operating object as the initial hover position, and restarting the timer; or
if the count of the timer reaches the first time threshold, determining, by the processor, that the floating or mid-air operation is a hover operation, setting a current position of the operating object as the initial hover position, and restarting the timer.

With reference to the first implementation manner or the second implementation manner of the second aspect, in a third implementation manner of the second aspect, the performing, by the processor, a zooming or rotation operation on content displayed on a screen of the terminal includes:
determining, by the processor, an area in the content displayed on the screen of the terminal and corresponding to a second position as a central area of the zooming or rotation operation, determining the second position as a starting position of the zooming or rotation operation, and performing the zooming or rotation operation on the content displayed on the screen of the terminal, where the second position is a floating position of the operating object when the terminal detects that the floating or mid-air operation of the operating object is a hover operation; and
the detecting, by the processor, a movement track of the operating object includes:
   calculating and recording, by the processor, a shift, detected by the sensor, between a current floating position and the starting position of the operating object, and using the shift as the movement track of the operating object.

With reference to the third implementation manner of the second aspect, in a fourth implementation manner of the second aspect, after performing the zooming or rotation operation on the content displayed on the screen, the processor is further configured to: when determining for a second time that a floating or mid-air operation of the operating object detected by the sensor is a hover operation, update a floating position of the operating object obtained when the hover operation of the operating object is determined for a second time, as a starting position of the zooming or rotation operation, and determine content displayed on the screen and corresponding to the floating position of the operating object obtained when the hover operation of the operating object is determined for a second time, as a central area of the zooming or rotation operation.

With reference to the second aspect or any one of the first to fourth implementation manners of the second aspect, in a fifth implementation manner of the second aspect, the movement track of the operating object includes one or any combination of the following:
a movement track of the operating object in an x-axis direction in a plane on which the operating object is located and that is parallel to the screen; or
a movement track of the operating object in a y-axis direction in a plane on which the operating object is located and that is parallel to the screen of the terminal; or
a movement track of the operating object in a z direction that is perpendicular to the screen.

With reference to the fifth implementation manner of the second aspect, in a sixth implementation manner of the second aspect, the processor is specifically configured to: when the movement track of the operating object in the z direction is getting close to the sensor, perform a zoom-in operation on the content displayed on the screen; or
the processor is specifically configured to: when the movement track of the operating object in the z direction is getting far from the sensor, perform a zoom-out operation on the content displayed on the screen; or
the processor is specifically configured to: when the movement track of the operating object in the x-axis direction is beyond a preset range, perform a rotation operation on the content displayed on the screen; or
the processor is specifically configured to: when the movement track of the operating object in the y-axis direction is beyond a preset range, perform a rotation operation on the content displayed on the screen.

According to the floating or mid-air operation processing method and apparatus provided in the present invention, a floating or mid-air operation of a user in a moving process is processed, a movement track and tendency of the user are determined, and corresponding zooming/rotation processing is performed according to the movement track of the user, so that displayed objects such as a web page and a picture can be viewed in a zooming manner during a floating or mid-air operation, which replaces an existing multi-touch function and is flexible and convenient to operate.

### BRIEF DESCRIPTION OF DRAWINGS

FIG. 1 is a flowchart of a floating or mid-air operation processing method according to Embodiment 1 of the present invention;
FIG. 2 is a schematic diagram of a floating or mid-air position of an operating object according to the present invention;
FIG. 3 is a schematic diagram of an effect of zooming of displayed content according to the present invention;
FIG. 4 is a schematic diagram of an effect of rotation of displayed content according to the present invention; and
FIG. 5 is a schematic diagram of a floating or mid-air operation processing apparatus according to Embodiment 2 of the present invention.

### DESCRIPTION OF EMBODIMENTS

By means of the accompanying drawings and embodiments, technical solutions of the present invention are further described below in detail.

A floating or mid-air operation processing method and apparatus provided in the present invention are applicable to a touchscreen and a terminal device that can sense a floating or mid-air operation, and can perform, without touching a screen, an operation such as zooming or rotation on displayed content such as a web page or a picture displayed on the screen.

### Embodiment 1

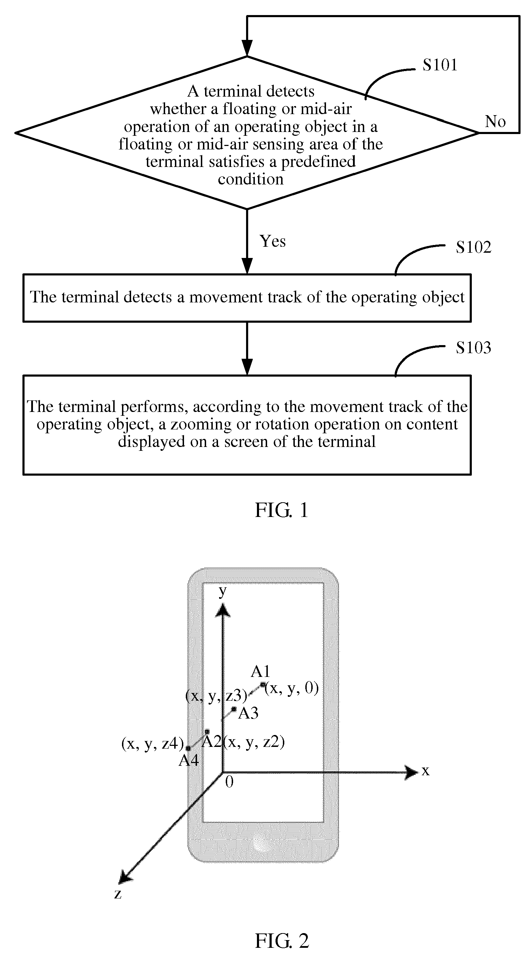

FIG. 1 is a flowchart of a floating or mid-air operation processing method according to this embodiment. As shown in FIG. 1, the floating or mid-air operation processing method in the present invention includes:
S101: A terminal detects whether a floating or mid-air operation of an operating object in a floating or mid-air sensing area of the terminal satisfies a predefined condition.

In the present invention, the operating object is generally an object that can be sensed by a touchscreen of the terminal, such as a finger of a user. The floating or mid-air operation refers to an operation that can be sensed by the touchscreen of the terminal in a case in which the operating object does not touch the touchscreen of the terminal.

By using the touchscreen or another sensor, the terminal detects the floating or mid-air operation of the operating object, and senses a change of a hover position of the operating object, which specifically includes one or any combination of the following: a change of the operating object in an x-axis direction of a plane rectangular coordinate system in a plane that is parallel to the screen of the terminal; a change of the operating object in a y-axis direction of the plane rectangular coordinate system; or a change of the operating object in a z direction that is perpendicular to the screen of the terminal.

If the terminal detects that the floating or mid-air operation of the operating object in the floating or mid-air sensing area of the terminal satisfies the predefined condition, S102 is performed. Otherwise, the terminal does not enter a rotation or zooming-in mode, that is, S102 is not performed.

Specifically, the terminal detects whether the floating or mid-air operation of the operating object is a hover operation of the operating object whose position remains unchanged or whose position shift is in a tolerance range within a first time threshold, where if yes, the floating or mid-air operation in the floating or mid-air sensing area of the terminal satisfies the predefined condition. The first time threshold may be preset according to an actual usage, for example, one second.

The shift may be a vector, which not only includes a direction but also includes a length.

The tolerance range is a distance range that is preset because a user may shake during operation, and when moving within this distance range, the operating object may be considered to be approximately at a same position. That is, when it is determined that shifts of the operating object in the x-axis direction, the y-axis direction, and the z direction are all within the tolerance range, it indicates that movement of the operating object belongs to shake, and the terminal considers that the operating object is at a same position.

Specifically, the detecting, by the terminal, whether the floating or mid-air operation of the operating object is a hover operation includes: when the terminal detects the operating object in the floating or mid-air sensing area of the terminal, setting a current position of the operating object as an initial hover position, and starting a timer; and if detecting that a shift of the operating object relative to the initial hover position is beyond the tolerance range, and a count of the timer does not reach the first time threshold, setting a current position of the operating object as the initial hover position, and restarting the timer; or if the count of the timer reaches the first time threshold, determining that the floating or mid-air operation is a hover operation, setting a current position of the operating object as the initial hover position, and restarting the timer.
S102: The terminal detects a movement track of the operating object.

In this case, the terminal enters a zooming/rotation mode.

Specifically, the movement track of the operating object includes one or any combination of the following: a movement track of the operating object in the x-axis direction of the plane rectangular coordinate system in the plane that is parallel to the screen of the terminal; or a movement track of the operating object in the y-axis direction of the plane rectangular coordinate system; or a movement track of the operating object in the z direction that is perpendicular to the screen of the terminal.

The terminal calculates a shift between the hover position and the starting position of the operating object in the x-axis direction, or the y-axis direction, or the z direction.

The movement track of the operating object may be a continuously changing track line, or may be changing points, that is, one or more points of the operating object are detected, and during calculation, a change of the hover position of the operating object is calculated by means of a signal waveform change caused by a point change.
S103: The terminal performs, according to the movement track of the operating object, a zooming or rotation operation on content displayed on a screen of the terminal.

Specifically, an area in the content displayed on the screen of the terminal and corresponding to a second position is determined as a central area of the zooming or rotation operation, the second position is determined as a starting position of the zooming or rotation operation, and the zooming or rotation operation is performed on the content displayed on the screen of the terminal, where the second position is a floating position of the operating object when the terminal detects that the floating or mid-air operation of the operating object is a hover operation.

The detecting, by the terminal, a movement track of the operating object includes: calculating and recording a shift between a current floating position and the starting position of the operating object, and using the shift as the movement track of the operating object.

The performing, by the terminal, a zooming or rotation operation on content displayed on a screen of the terminal specifically includes one or any combination of the following:
when the movement track of the operating object in the z direction is getting close to the screen of the terminal, performing, by the terminal, a zoom-in operation on the content displayed on the screen of the terminal; or
when the movement track of the operating object in the z direction is getting far from the screen of the terminal, performing, by the terminal, a zoom-out operation on the content displayed on the screen of the terminal; or
when the movement track of the operating object in the x-axis direction is beyond a preset range, performing, by the terminal, a rotation operation on the content displayed on the screen of the terminal; or
when the movement track of the operating object in the y-axis direction is beyond a preset range, performing, by the terminal, a rotation operation on the content displayed on the screen of the terminal.

A zoom ratio is controlledaccording to a change of the shift relative to the starting position in the z direction, for example, 0.5 unit in the z direction has a zoom value of 4 times, zooming in four times is performed in a positive direction (a distance to the screen is increased), and zooming out to a quarter is performed in a negative direction (a distance to the screen is decreased). That is, when Δ z < 0, it indicates getting far from the screen, a zoom-out instruction is generated, and the zoom-out operation is performed; and when Δ z > 0, it indicates getting close to the screen, a zoom-in instruction is generated, and the zoom-in operation is performed.

Rotation is controlled according to a change of the shift relative to the starting position in the x-axis direction or the y-axis direction. When the shift of the hover position is beyond a preset range (preset as, for example, SAFE_X and SAFE_Y), a rotation speed is calculated according to an excess distance, so as to rotate the content on the screen. If the rotation speed in either the x-axis direction or the y-axis direction is greater than 0, a service used for detecting a floating or mid-air operation gesture may send a message, so that a sub-interface rotates continuously, or rotates by a degree, or rotates according to a gesture track. If the rotation speeds in the x-axis direction and the y-axis direction both are 0, it indicates that the operating object moves within the preset range (SAFE_X and SAFE_Y), original rotation processing is canceled, and the rotation is stopped.

Generally, a rotation direction is determined based on a direction and a distance between a current position and a starting position (when the timer is started) of a finger. For example, a position of the finger is just on a right side of a central point, and in this case, the interface is rotated rightwards; a length of a distance between the position and the central point may affect a rotation speed, and if the distance is longer, the rotation is quicker. If the finger is at a position on an upper right corner with 45 degrees relative to the central point, the interface is rotated rightwards and upwards at the same time, and a rotation speed is also determined according to the position of the central point. If the user moves the finger back to the position of the central point, the rotation of the interface is stopped.

Optionally, after S103, the method further includes:
when the terminal detects for a second time that a floating or mid-air operation of the operating object is a hover operation, updating, by the terminal, a floating position of the operating object obtained when the hover operation of the operating object is detected for a second time, as a starting position of the zooming or rotation operation, and determining content displayed on the screen of the terminal and corresponding to the floating position of the operating object obtained when the hover operation of the operating object is detected for a second time, as a central area of the zooming or rotation operation.

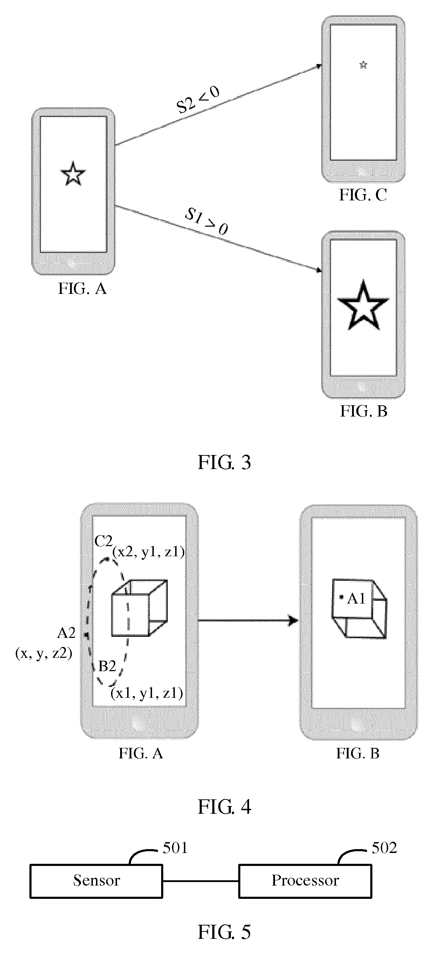

For example, FIG. 2 is a schematic diagram of hover positions of the operating object according to the present invention. In FIG. 2, there are four points: A1 to A4, and coordinates are respectively (x, y, 0), (x, y, z2), (x, y, z3), and (x, y, z4), where A2 to A4 are the hover positions of the operating object, and A1 is a point on the screen and corresponding to A2 to A4. If the operating object (for example, a finger) moves from A2 to A3, that is, a shift is s1 = z2 - z3 > 0, zooming in is performed in the view by using the A1 point (x, y) as a center. If the operating object moves from A2 to A4, that is, a shift is s2 = z2 - z4 < 0, zooming out is performed in the view by using the A1 point (x, y) as a center. As shown in FIG. 3, when s1 > 0, the content displayed on the screen changes from FIG. A to FIG. B in FIG. 3. When s2 < 0, the content displayed on the screen changes from FIG. A to FIG. C in FIG. 3.

Optionally, during zooming, a change speed of the content displayed on the screen may also be set, and generally, the change speed of the content is less than a motion speed of the operating object.

Similarly, a rotation situation is shown in FIG. 4. In FIG. 4, there are four points: A1, A2, B2, and C2, and coordinates are respectively (x, y, 0), (x, y, z2), (x1, y1, z1), and (x2, y1, z1). A2 is the starting position, A1 is a point on the screen and corresponding to A2, and the operating object moves from A2 to C2 and then to B2. Because s3 = z2 - z1 < 0, there is a shift in both the x-axis direction and the y-axis direction, and the movement track is beyond a preset range, the content on the screen is zoomed out and rotated at the same time, that is, a view changes from FIG. A to FIG. B in the FIG. 4.

Optionally, after a period of time when detecting that the operating object leaves the floating or mid-air sensing area of the touchscreen, the terminal may immediately exit from a state of the detecting a movement track of the operating object.

The floating or mid-air operation processing method provided in the present invention is described above in detail, and a floating or mid-air operation processing apparatus provided in the present invention is described below in detail.

### Embodiment 2

FIG. 5 is a schematic diagram of a floating or mid-air operation processing apparatus according to this embodiment. As shown in FIG. 5, the floating or mid-air operation processing apparatus in the present invention includes: a sensor 501 and a processor 502.

The sensor 501 is configured to detect a floating or mid-air operation of an operating object in a floating or mid-air sensing area of the sensor 501.

The sensor 501 may be a sensor, such as a touchscreen, a camera, an ultrasonic sensor, or an infrared sensor, or may be a combination of sensors that are used cooperatively, such as a touchscreen and a camera, or an ultrasonic sensor, or an infrared sensor. A touchscreen is used as an example for description in this embodiment of the present invention, and a sensor, such as a camera, an ultrasonic sensor, or an infrared sensor, is similar thereto.

In the present invention, the operating object is generally an object that can be sensed by the sensor 501, such as a finger of a user. The floating or mid-air operation refers to an operation that can be sensed by the sensor 501 in a case in which the operating object does not touch the sensor 501.

The sensor 501 senses a change of a hover position of the operating object, which specifically includes one or any combination of the following: a change of the operating object in an x-axis direction in a plane on which the operating object is located and that is parallel to the screen; or a change of the operating object in a y-axis direction in a plane on which the operating object is located and that is parallel to the screen; or a change of the operating object in a z-axis direction that is perpendicular to the sensor 501.

The processor 502 is configured to determine whether the floating or mid-air operation of the operating object detected by the sensor 501 satisfies a predefined condition.

The processor 502 is configured to: when the processor 502 determines that the floating or mid-air operation of the operating object satisfies the predefined condition, detect a movement track of the operating object by using the sensor 501. In this case, a terminal triggers activation of a zooming/rotation mode.

The determining, by the processor 502, whether the floating or mid-air operation of the operating object detected by the sensor satisfies a predefined condition is specifically: determining, by the processor 502, whether the floating or mid-air operation of the operating object is a hover operation of the operating object whose position remains unchanged or whose position shift is in a tolerance range within a first time threshold, where if yes, the floating or mid-air operation in the floating or mid-air sensing area of the terminal satisfies the predefined condition. The first time threshold may be preset according to an actual usage, for example, one second.

The shift may be a vector, which not only includes a direction but also includes a length.

The tolerance range is a distance range that is preset because a user may shake during operation, and when moving within this distance range, the operating object may be considered to be approximately at a same position. That is, when it is determined that shifts of the operating object in the x-axis direction, the y-axis direction, and the z direction are all within the tolerance range, it indicates that movement of the operating object belongs to shake, and the terminal considers that the operating object is at a same position.

The determining, by the processor 502, whether the floating or mid-air operation of the operating object is a hover operation specifically includes: when the sensor 501 detects the operating object, setting, by the processor 502, a current position of the operating object as an initial hover position, and starting a timer; and if the processor 502 determines that a shift, detected by the sensor 501, of the operating object relative to the initial hover position is beyond the tolerance range, and a count of the timer does not reach the first time threshold, setting, by the processor, a current position of the operating object as the initial hover position, and restarting the timer; or if the count of the timer reaches the first time threshold, determining, by the processor 502, that the floating or mid-air operation is a hover operation, setting a current position of the operating object as the initial hover position, and restarting the timer.

The processor 502 is configured to detect the movement track of the operating object by using the sensor 501.

The movement track of the operating object includes one or any combination of the following: a movement track of the operating object in an x-axis direction of a plane rectangular coordinate system in the plane that is parallel to the screen of the terminal; or a movement track of the operating object in a y-axis direction of the plane rectangular coordinate system; or a movement track of the operating object in the z direction that is perpendicular to the screen.

The processor 502 calculates a shift between the hover position and the starting position of the operating object in the x-axis direction, or the y-axis direction, or the z direction.

The movement track of the operating object may be a continuously changing track line, or may be changing points, that is, one or more points of the operating object are detected, and during calculation, a change of the hover position of the operating object is calculated by means of a signal waveform change caused by a point change.

The processor 502 is further configured to perform, according to the movement track of the operating object, a zooming or rotation operation on content displayed on the screen.

The processor 502 determines an area in the content displayed on the screen of the terminal and corresponding to a second position as a central area of the zooming or rotation operation, determines the second position as a starting position of the zooming or rotation operation, and performs the zooming or rotation operation on the content displayed on the screen of the terminal, where the second position is a floating position of the operating object when the terminal detects that the floating or mid-air operation of the operating object is a hover operation.

The detecting, by the processor 502, a movement track of the operating object includes:
calculating and recording, by the processor 502, a shift, detected by the sensor, between a current floating position and the starting position of the operating object, and using the shift as the movement track of the operating object.

Specifically, the processor 502 is configured to: when the movement track of the operating object in the z direction is getting close to the sensor 501, perform a zoom-in operation on the content displayed on the screen; or
the processor 502 is configured to: when the movement track of the operating object in the z direction is getting far from the sensor 501, perform a zoom-out operation on the content displayed on the screen; or
the processor 502 is configured to: when the movement track of the operating object in the x-axis direction is beyond a preset range, perform a rotation operation on the content displayed on the screen; or
the processor 502 is configured to: when the movement track of the operating object in the y-axis direction is beyond a preset range, perform a rotation operation on the content displayed on the screen.

A zoom ratio is controlled according to a change of the shift relative to the starting position in the z direction, for example, 0.5 unit has a zoom value of 4 times in the z direction, zooming in four times is performed in a positive direction (a distance to the screen is increased), and zooming out to a quarter is performed in a negative direction (a distance to the screen is decreased). That is, when Δ z < 0, it indicates being far from the screen, a zoom-out instruction is generated, and the zoom-out operation is performed; and when Δ z > 0, it indicates being close to the screen, a zoom-in instruction is generated, and the zoom-in operation is performed.

Rotation is controlled according to a change of the shift relative to the starting position in the x-axis direction or the y-axis direction. When the shift of the hover position is beyond a preset range (preset as, for example, SAFE_X and SAFE_Y), a rotation speed is calculated according to an excess distance, so as to rotate the content on the screen. If the rotation speed in either the x-axis direction or the y-axis direction is greater than 0, a service used for detecting a floating or mid-air operation gesture may send a message, so that a sub-interface rotates continuously, or rotates by a degree, or rotates according to a gesture track. If the rotation speeds in the x-axis direction and the y-axis direction both are 0, it indicates that the operating object moves within the preset range (SAFE_X and SAFE_Y), original rotation processing is canceled, and the rotation is stopped.

Generally, a rotation direction is determined based on a direction and a distance between a current position and a starting position (when the timer is started) of a finger. For example, a position of the finger is just on a right side of a central point, and in this case, the interface is rotated rightwards. A length of a distance between the position and the central point may affect a rotation speed, and if the distance is longer, the rotation is quicker. If the finger is at a position on an upper right corner with 45 degrees relative to the central point, the interface is rotated rightwards and upwards at the same time, and a rotation speed is also determined according to the position of the central point. If the user moves the finger back to the position of the central point, the rotation of the interface is stopped.

Optionally, after performing the zooming or rotation operation on the content displayed on the screen, the processor 502 is further configured to: when determining for a second time that a floating or mid-air operation of the operating object detected by the sensor is a hover operation, update a floating position of the operating object obtained when the hover operation of the operating object is determined for a second time, as a starting position of the zooming or rotation operation, and determine content displayed on the screen and corresponding to the floating position of the operating object obtained when the hover operation of the operating object is determined for a second time, as a central area of the zooming or rotation operation.

According to the floating or mid-air operation processing method and apparatus provided in the present invention, a floating or mid-air operation of a user in a moving process is processed, a movement track and tendency of the user are determined, and corresponding zooming/rotation processing is performed according to the movement track of the user, so that displayed objects such as a web page and a picture can be viewed in a zooming manner during a floating or mid-air operation, which replaces an existing multi-touch function and is flexible and convenient to operate.

A person skilled in the art may be further aware that, in combination with the examples described in the embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A floating or mid-air operation processing method, wherein the method comprises:
detecting, by a terminal, whether a floating or mid-air operation of an operating object in a floating or mid-air sensing area of the terminal satisfies a predefined condition; and if yes, detecting, by the terminal, a movement track of the operating object; and
performing, by the terminal according to the movement track of the operating object, a zooming or rotation operation on content displayed on a screen of the terminal.

2. The method according to claim 1, wherein the detecting, by a terminal, whether a floating or mid-air operation of an operating object in a floating or mid-air sensing area of the terminal satisfies a predefined condition comprises: detecting, by the terminal, whether the floating or mid-air operation of the operating object is a hover operation of the operating object within a first time threshold whose position remains unchanged or whose position shift is in a tolerance range, wherein if yes, the floating or mid-air operation in the floating or mid-air sensing area of the terminal satisfies the predefined condition.

3. The method according to claim 2, wherein the detecting, by the terminal, whether the floating or mid-air operation of the operating object is a hover operation specifically comprises:
when the terminal detects the operating object in the floating or mid-air sensing area of the terminal, setting a current position of the operating object as an initial hover position, and starting a timer; and
if detecting that a shift of the operating object relative to the initial hover position is beyond the tolerance range, and a count of the timer does not reach the first time threshold, setting a current position of the operating object as the initial hover position, and restarting the timer; or
if the count of the timer reaches the first time threshold, determining that the floating or mid-air operation is a hover operation, setting a current position of the operating object as the initial hover position, and restarting the timer.

4. The method according to claim 2 or 3, wherein the performing, by the terminal, a zooming or rotation operation on content displayed on a screen of the terminal comprises:
determining an area in the content displayed on the screen of the terminal and corresponding to a second position as a central area of the zooming or rotation operation, determining the second position as a starting position of the zooming or rotation operation, and performing the zooming or rotation operation on the content displayed on the screen of the terminal, wherein the second position is a floating position of the operating object when the terminal detects that the floating or mid-air operation of the operating object is a hover operation; and
the detecting, by the terminal, a movement track of the operating object comprises:
calculating and recording a shift between a current floating position and the starting position of the operating object, and using the shift as the movement track of the operating object.

5. The method according to claim 4, after the performing, by the terminal, a zooming or rotation operation on content displayed on a screen of the terminal, further comprising:
when the terminal detects for a second time that a floating or mid-air operation of the operating object is a hover operation, updating, by the terminal, a floating position of the operating object obtained when the hover operation of the operating object is detected for a second time, as a starting position of the zooming or rotation operation, and determining content displayed on the screen of the terminal and corresponding to the floating position of the operating object obtained when the hover operation of the operating object is detected for a second time, as a central area of the zooming or rotation operation.

6. The method according to any one of claims 1 to 5, wherein the movement track of the operating object comprises one or any combination of the following:
a movement track of the operating object in an x-axis direction of a plane rectangular coordinate system in a plane that is parallel to the screen of the terminal; or
a movement track of the operating object in a y-axis direction of the plane rectangular coordinate system; or
a movement track of the operating object in a z direction that is perpendicular to the screen of the terminal.

7. The method according to claim 6, wherein the performing, by the terminal according to the movement track of the operating object, a zooming or rotation operation on content displayed on a screen of the terminal specifically comprises one or any combination of the following:
when the movement track of the operating object in the z direction is getting close to the screen of the terminal, performing, by the terminal, a zoom-in operation on the content displayed on the screen of the terminal;
when the movement track of the operating object in the z direction is getting far from the screen of the terminal, performing, by the terminal, a zoom-out operation on the content displayed on the screen of the terminal;
when the movement track of the operating object in the x-axis direction is beyond a preset range, performing, by the terminal, a rotation operation on the content displayed on the screen of the terminal; and
when the movement track of the operating object in the y-axis direction is beyond a preset range, performing, by the terminal, a rotation operation on the content displayed on the screen of the terminal.

8. A floating or mid-air operation processing apparatus, wherein the apparatus comprises: a sensor and a processor, wherein
the sensor is configured to detect a floating or mid-air operation of an operating object in a floating or mid-air sensing area of the sensor;
the processor is configured to determine whether the floating or mid-air operation of the operating object detected by the sensor satisfies a predefined condition; and the processor is configured to: when the processor determines that the floating or mid-air operation of the operating object satisfies the predefined condition, detect a movement track of the operating object by using the sensor; and
the processor is further configured to perform, according to the movement track of the operating object, a zooming or rotation operation on content displayed on a screen.

9. The apparatus according to claim 8, wherein the determining, by the processor, whether the floating or mid-air operation of the operating object detected by the sensor satisfies a predefined condition is specifically: determining, by the processor, whether the floating or mid-air operation of the operating object detected by the sensor is a hover operation of the operating object whose position remains unchanged or whose position shift is in a tolerance range within a first time threshold, wherein if yes, the floating or mid-air operation in the floating or mid-air sensing area of the apparatus satisfies the predefined condition.

10. The apparatus according to claim 9, wherein the determining, by the processor, whether the floating or mid-air operation of the operating object is a hover operation specifically comprises: when the sensor detects the operating object, setting, by the processor, a current position of the operating object as an initial hover position, and starting a timer; and
if the processor determines that a shift, detected by the sensor, of the operating object relative to the initial hover position is beyond the tolerance range, and a count of the timer does not reach the first time threshold, setting, by the processor, a current position of the operating object as the initial hover position, and restarting the timer; or
if the count of the timer reaches the first time threshold, determining, by the processor, that the floating or mid-air operation is a hover operation, setting a current position of the operating object as the initial hover position, and restarting the timer.

11. The apparatus according to claim 9 or 10, wherein the performing, by the processor, a zooming or rotation operation on content displayed on a screen of the terminal, comprising:
determining, by the processor, an area in the content displayed on the screen of the terminal and corresponding to a second position as a central area of the zooming or rotation operation, determining the second position, as a starting position of the zooming or rotation operation, and performing the zooming or rotation operation on the content displayed on the screen of the terminal, wherein the second position is a floating position of the operating object when the terminal detects that the floating or mid-air operation of the operating object is a hover operation; and
the detecting, by the processor, a movement track of the operating object comprises:
calculating and recording, by the processor, a shift, detected by the sensor, between a current floating position and the starting position of the operating object, and using the shift as the movement track of the operating object.

12. The apparatus according to claim 11, wherein after performing the zooming or rotation operation on the content displayed on the screen, the processor is further configured to: when determining for a second time that a floating or mid-air operation of the operating object detected by the sensor is a hover operation, update a floating position of the operating object obtained when the hover operation of the operating object is determined for a second time, as a starting position of the zooming or rotation operation, and determine content displayed on the screen and corresponding to the floating position of the operating object obtained when the hover operation of the operating object is determined for a second time, as a central area of the zooming or rotation operation.

13. The apparatus according to any one of claims 8 to 12, wherein the movement track of the operating object comprises one or any combination of the following:
a movement track of the operating object in an x-axis direction of a plane rectangular coordinate system in a plane on which the operating object is located and that is parallel to the screen; or
a movement track of the operating object in a y-axis direction of the plane rectangular coordinate system; or
a movement track of the operating object in a z direction that is perpendicular to the screen.

14. The apparatus according to claim 13, wherein the processor is specifically configured to: when the movement track of the operating object in the z direction is getting close to the sensor, perform a zoom-in operation on the content displayed on the screen; or
the processor is specifically configured to: when the movement track of the operating object in the z direction is getting far from the sensor, perform a zoom-out operation on the content displayed on the screen; or
the processor is specifically configured to: when the movement track of the operating object in the x-axis direction is beyond a preset range, perform a rotation operation on the content displayed on the screen; or
the processor is specifically configured to: when the movement track of the operating object in the y-axis direction is beyond a preset range, perform a rotation operation on the content displayed on the screen.
